# EUROPÄISCHE PATENTSCHRIFT

(11) **EP 3 590 169 B1**
(45) Veröffentlichungstag und Bekanntmachung des Hinweises auf die Patenterteilung: **07.04.2021**
(21) Anmeldenummer: 18707029.7
(22) Anmeldetag: 22.02.2018
(51) Int. Cl.: H02J 3/14, H02J 3/32, H02J 3/38

(54) **ENERGIEMANAGEMENT-VERFAHREN FÜR EIN ENERGIESYSTEM UND ENERGIESYSTEM**
ENERGY MANAGEMENT METHOD FOR AN ENERGY SYSTEM, AND ENERGY SYSTEM
PROCÉDÉ DE GESTION D'ÉNERGIE POUR SYSTÈME ÉNERGÉTIQUE ET SYSTÈME ÉNERGÉTIQUE

(30) Priorität: 28.02.2017 DE 102017203249
(43) Veröffentlichungstag der Anmeldung: 08.01.2020
(73) Patentinhaber: Viessmann Climate Solutions SE, 35108 Allendorf (Eder) (DE)
(72) Erfinder: ARNOLD, Christian, 36119 Neuhof-Rommerz (DE); HAFNER, Bernd, 35108 Allendorf (DE); LÖDIGE, Daniel, 35041 Marburg (DE); STRUBEL, Jan, 64287 Darmstadt (DE)
(74) Vertreter: MERH-IP Matias Erny Reichl Hoffmann Patentanwälte PartG mbB
(86) Internationale Anmeldenummer: PCT/EP2018/054424
(87) Internationale Veröffentlichungsnummer: WO 2018/158139

(56) Entgegenhaltungen:
- WO-A1-2013/190603
- JP-A- 2017 005 851
- US-A1- 2014 222 237
- US-A1- 2015 350 391

## Beschreibung

Die vorliegende Erfindung betrifft ein Energiemanagement-Verfahren für ein Energiesystem in einem Gebäude sowie ein Energiesystem. Insbesondere soll ein Energiemanagement-Verfahren bereitgestellt werden, das eine für einen vorbestimmten Zeitraum ausreichende Energiereserve für Energieverbraucher in einem Energiespeicher vorrätig hält, um einen Bezug von Energie aus einem öffentlichen Stromnetz zu vermeiden oder zu minimieren.

Ziel eines Energiemanagements ist es, die Erzeugung und den Verbrauch von Energie in einem Gebäude so effizient wie möglich zu gestalten. Ferner kann es ein Ziel sein, den Bezug von Energie aus einem öffentlichen Netz zu minimieren. Insbesondere beim Einsatz von erneuerbaren Energiequellen wie zum Beispiel Photovoltaikanlagen oder Windturbinen ist die Energieerzeugung vom Stand der Sonne und/oder vom Wetter abhängig, so dass zu bestimmten Tageszeiten ein Überangebot von Energie entstehen kann, während zu anderen Tageszeiten, zum Beispiel abends oder nachts, ein erhöhter Energiebedarf bestehen kann.

Johannes Weniger, Joseph Bergner, Tjarko Tjaden und Volker Quaschning von der Hochschule für Technik und Wirtschaft HTW Berlin beschreiben in dem Artikel "Solarstrom prognosebasiert speichern", erschienen im September 2015 in SONNE WIND & WÄRME, Seiten 68 bis 69, Verfahren zum prognosebasierten Speichern von Solarstrom, um Abregelungsverluste zu vermeiden. Hierbei wird das Laden eines Energiespeichers auf die Mittagszeit verschoben, wenn die Photovoltaikanlage (PV-Anlage) am meisten Energie erzeugt.

Wie in dem Artikel oben geschildet, kann ein Energiesystem mit einem Energiespeicher und einer erneuerbaren Energiequelle möglichst effizient betrieben werden, wenn das Laden des Energiespeichers in Abhängigkeit einer Berechnung der erwarteten Energieerzeugung durch die erneuerbare Energiequelle erfolgt. Die Effizienz des Betriebs kann weiter gesteigert werden, indem auch das Entladen des Energiespeichers auf Basis einer Berechnung oder Schätzung des erwarteten Energieverbrauchs erfolgt. Das Ziel ist hierbei, dass zu Tageszeiten, in denen die erneuerbare Energiequelle keine Energie liefert, ausreichend Energie im Energiespeicher vorrätig ist, um Energieverbraucher im Energiesystem mit Energie zu versorgen. Die vorliegende Erfindung löst diese Aufgabe durch ein Verfahren gemäß Anspruch 1 und ein Energiesystem gemäß Anspruch 8.

Die vorliegende Erfindung betrifft ein Energiemanagement-Verfahren für ein Energiesystem in einem Gebäude. Das Energiesystem weist eine Vielzahl nicht steuerbarer Energieverbraucher und mindestens einen steuerbaren Energieverbraucher auf. Das Energiesystem weist einen Energiespeicher zum Speichern von Energie und einen Netzanschlusspunkt auf, über den Energie aus dem Netz bezogen und/oder in das Netz eingespeist werden kann. Das Energiesystem umfasst ferner eine Regel- oder Steuereinrichtung, die dazu ausgelegt ist, den mindestens einen steuerbaren Energieverbraucher und den Energiespeicher zu steuern. Die Vielzahl nicht steuerbarer Energieverbraucher ist konfiguriert, Energie aus dem Netz oder vom Energiespeicher zu beziehen. Das Verfahren umfasst die im Folgenden beschriebenen Verfahrensschritte, die zyklisch im Abstand von Intervallen durchgeführt werden.

In einem ersten Verfahrensschritt wird ein aktueller Ladezustand des Energiespeichers erfasst. Die Regel- oder Steuereinrichtung kann über drahtgebundene oder drahtlose Kommunikationsleitungen mit dem Energiespeicher zum Datenaustausch verbunden sein, um den aktuellen Ladezustand des Energiespeichers zu erfassen. Außerdem kann die Regel- oder Steuereinrichtung Regel- oder Steuersignale an den Energiespeicher und den mindestens einen steuerbaren Energieverbraucher senden. Darüber hinaus kann das Energiesystem von der Regel-oder Steuereinrichtung steuerbare Wechselrichter umfassen. Ferner kann das Energiesystem eine Vielzahl von Sensoren, zum Beispiel zum Messen von Energieverbräuchen, aufweisen, die entsprechende Messsignale an die Regel- oder Steuereinrichtung übertragen.

In einem weiteren Verfahrensschritt wird ein Zeitraum festgelegt, während dessen die nicht steuerbaren Energieverbraucher mit Energie aus dem Energiespeicher versorgt werden. Insbesondere sollen die nicht Steuerbaren Energieverbraucher während des festgelegten Zeitraums ausschließlich mit Energie vom Energiespeicher versorgt werden. Der Zeitraum kann fest oder in Abhängigkeit von Parametern vorgegeben werden. Vorzugsweise kann der Zeitraum in Abhängigkeit von Betriebsparametern einer erneuerbaren Energiequelle vorgegeben werden. Wenn das Energiesystem zum Beispiel eine Photovoltaikanlage zum Beladen des Energiespeichers umfasst, kann der Zeitraum in Abhängigkeit der Zeitpunkte von Sonnenuntergang und Sonnenaufgang festgelegt werden. Der Zeitraum kann besonders vorteilhaft so festgelegt werden, dass die nicht steuerbaren Energieverbraucher mindestens bis zum nächstmöglichen Ladevorgang des Energiespeichers mit Energie aus dem Energiespeicher versorgt werden können. Der Zeitraum wird vorzugsweise innerhalb eines Prädiktionshorizonts von bis zu 24 Stunden festgelegt.

In einem weiteren Schritt kann ein Energiebedarf der Vielzahl nicht steuerbarer Energieverbraucher während des festgelegten Zeitraums ΔT₀ ermittelt oder abgeschätzt werden. Das Abschätzen des Energiebedarfs kann beispielsweise anhand von protokollierten Verbrauchsdaten der Vergangenheit erfolgen. Alternativ oder zusätzlich kann eine Modellrechnung zum Abschätzen des Energiebedarfs durchgeführt werden. Das Ermitteln des Energiebedarfs kann entweder von der Regel- oder Steuereinrichtung oder von einem entfernten, zum Beispiel über das Internet verbundenen Rechner oder Server durchgeführt werden. Um die Genauigkeit des ermittelten Werts des Energiebedarfs zu verbessern, können dem Verfahren Informationen über die nicht steuerbaren Energieverbraucher vorliegen, wie zum Beispiel deren Anzahl, deren minimale, maximale und/oder durchschnittliche Leistungsaufnahme und/oder typische Zeiten während eines Tages, an denen die jeweiligen Energieverbraucher verwendet werden.

Bei der Berechnung können auch Daten wie der Wochentag oder das Datum berücksichtigt werden, da zum Beispiel an Wochenenden oder Feiertagen ein anderes Verbrauchsmuster zu erwarten ist als an Werktagen. Außerdem werden bestimmte Verbraucher eher an kalten oder heißen Tagen verwendet, so dass neben der reinen Datumsinformation auch Wetterinformationen berücksichtigt werden können. Zusätzlich kann das Energiesystem konfiguriert sein, Anwesenheitsinformationen über die Benutzer oder Bewohner des Gebäudes zu verwenden. Diese Informationen können zum Beispiel über Sensoren, Verbrauchsmuster und/oder eine App oder ein sonstiges Benutzerinterface mit dem Energiesystem durch die Benutzer selbst generiert werden.

In einem weiteren Verfahrensschritt wird ein Grenzwert des Ladezustands des Energiespeichers in Abhängigkeit eines ermittelten Energiebedarfs der Vielzahl nicht steuerbarer Energieverbraucher während des Zeitraums und in Abhängigkeit eines Zeitpunkts innerhalb des festgelegten Zeitraums ermittelt. Beim Ermitteln des Grenzwerts kann auch ein Wirkungsgrad des Ladens und/oder Entladens des Energiespeichers berücksichtigt werden. Ferner kann der Grenzwert auch in Abhängigkeit einer vorzuhaltenden Sicherheitsreserve ermittelt werden. Die kann zum Beispiel für den Fall geschehen, dass unvorhergesehene Energieverbräuche auftreten.

Falls der aktuelle Ladezustand des Energiespeichers größer als der ermittelte Grenzwert des Ladezustands ist wird der mindestens eine steuerbare Energieverbraucher mit Energie vom Energiespeicher betrieben. Das heißt, dass solange der Energiespeicher einen Ladungszustand aufweist, der über dem Grenzwert liegt, kann die gespeicherte Energie auch zum Betreiben des mindestens einen steuerbare Energieverbrauchers verwendet werden. Hierdurch kann ein Bezug von Energie aus dem öffentlichen Stromnetz zum Betreiben des mindestens einen steuerbaren Energieverbrauchers verringert oder vermieden werden. Das Betreiben des mindestens einen steuerbaren Energieverbrauchers in Abhängigkeit des Grenzwerts erfolgt insbesondere während des festgelegten Zeitraums.

Falls der aktuelle Ladezustand des Energiespeichers kleiner als oder gleich dem ermittelten Grenzwert des Ladezustands ist, wird der mindestens eine steuerbare Energieverbraucher mit Energie vom Netz betrieben. Hierdurch soll sichergestellt werden, dass der Energiebedarf der nicht steuerbaren Energieverbraucher vom Energiespeicher gedeckt werden kann. Insbesondere wenn der mindestens eine steuerbare Energieverbraucher über einen gesonderten Stromzähler für einen ermäßigten Stromtarif verfügt, kann es vorteilhaft sein, den steuerbaren Energieverbraucher mit Strom aus dem öffentlichen Netz zu betreiben. Das Betreiben des mindestens einen steuerbaren Energieverbrauchers in Abhängigkeit des Grenzwerts erfolgt insbesondere während des festgelegten Zeitraums.

Nicht steuerbare Energieverbraucher sind solche Energieverbraucher, die nicht von der Regel- oder Steuereinrichtung gesteuert werden können. Sie werden von Benutzern beziehungsweise Bewohnern des Gebäudes ein- und ausgeschaltet, beziehungsweise schalten sich selbsttätig ein und aus, wie zum Beispiel ein Kühlschrank oder Lichter, die über Bewegungssensoren gesteuert werden. Nicht steuerbare Energieverbraucher können auch sonstige herkömmliche stromverbrauchende Haushaltsgeräte sein wie zum Beispiel Lampen, Unterhaltungselektronik, Küchengeräte, usw.

Ein steuerbarer Energieverbraucher kann von der Regel- oder Steuereinrichtung ein- und ausgeschaltet werden, so dass zumindest der Zeitpunkt des Verbrauchs des steuerbaren Energieverbrauchers durch die Regel- oder Steuereinrichtung vorgegeben werden kann. Ferner kann die Leistungsaufnahme des steuerbaren Energieverbrauchers durch die Regel- oder Steuereinrichtung regel- oder steuerbar sein. Zumindest ist der Regel- oder Steuereinrichtung aber bekannt welche maximale und minimale Leistungsaufnahme durch den steuerbaren Energieverbraucher zu erwarten ist. Ein steuerbarer Energieverbraucher kann beispielsweise eine Wärmepumpe, ein Nachtwärmespeicher, eine Vorrichtung zum Belüften mindestens eines Raumes, eine Klimaanlage, eine Ladestation für ein Elektrofahrzeug oder eine steuerbare Waschmaschine sein.

Der Energiespeicher kann insbesondere dazu konfiguriert sein, elektrische Energie zu speichern. Prinzipiell kann die Erfindung aber auch auf Systeme mit einem Energiespeicher angewendet werden, der Energie in Form von Wärme oder mechanischer Energie, zum Beispiel in Form von Bewegungsenergie (zum Beispiel durch ein Schwungrad) oder potentieller Energie, speichert.

Vorzugsweise ist mindestens ein steuerbarer Energieverbraucher eine Wärmepumpe. Der Betrieb der Wärmepumpe kann zum Beispiel von der Regel- oder Steuerungseinrichtung geregelt oder gesteuert werden. Eine Wärmepumpe kann zum Heizen und/oder Kühlen eines Trägermediums zum Heizen und/oder Kühlen von Räumen des Gebäudes verwendet werden. Die Wärmpumpe kann ferner mit einem Warm- und/oder Kaltwasserspeicher gekoppelt sein, so dass Energie auch in Form von Wärme und/oder Kälte gespeichert werden kann.

Weiter ist bevorzugt, dass der mindestens eine steuerbare Energieverbraucher mit einen separaten Stromzähler über den Netzanschlusspunkt am öffentlichen Stromnetz angeschlossen ist. Hierdurch kann Energie mit einem besonders günstigen Tarif für den steuerbaren Energieverbraucher bezogen werden. Zum Beispiel werden für Wärmepumpen besonders günstige Wärmepumpen-Stromtarife angeboten.

Das Energiesystem kann ferner eine erneuerbare Energiequelle wie zum Beispiel eine Photovoltaikanlage (PV-Anlage) oder eine Windturbine umfassen, die konfiguriert ist, die (steuerbaren und nicht steuerbaren) Energieverbraucher und den Energiespeicher mit Energie zu versorgen. Die Photovoltaikanlage weist üblicherweise einen Wechselrichter auf, der konfiguriert ist, den von der PV-Anlage erzeugten Gleichstrom in Wechselstrom umzuwandeln. Der Wechselrichter kann zum Beispiel von der Regel- oder Steuereinrichtung gesteuert werden. Ferner kann die PV-Anlage einen Stromzähler umfassen, um die erzeugte Energiemenge zu messen. Insbesondere kann ein Teil der erzeugten Energie zum Laden des Energiespeichers verwendet werden. Ferner kann Energie von der PV-Anlage über den Netzanschlusspunkt ins öffentliche Stromnetz eingespeist werden. Die eingespeiste Energie wird gemessen, um die Vergütung zu berechnen.

Der Energiespeicher kann vorzugsweise nur von der erneuerbaren Energiequelle, wie zum Beispiel der Photovoltaikanlage geladen werden. Dadurch soll vermieden werden, dass Energie aus dem öffentlichen Netz zum Laden des Energiespeichers verwendet wird, da der Tarif zum Beziehen von Energie aus dem öffentlichen Netz in der Regel deutlich höher ist, als der Tarif der Vergütung für das Einspeisen von Energie von der erneuerbaren Energiequelle ins öffentliche Netz.

Die Regel- oder Steuereinrichtung kann mit dem Internet verbunden sein, um eine Prognose der Sonneneinstrahlung zum Ermitteln eines Schätzwerts der Energieerzeugung durch die Photovoltaikanlage zu empfangen. Die Prognose der Sonneneinstrahlung kann auch über eine Wettervorhersage erzeugt werden. Hierzu können zu regelmäßigen Zeitpunkten aktualisierte Daten an die Regel- oder Steuereinrichtung übertragen werden. Alternativ kann die Regel- oder Steuereinrichtung einen Schätzwert der Energieerzeugung durch die Photovoltaikanlage von einem zentralen Server über das Internet empfangen. Wird eine andere erneuerbare Energiequelle als eine PV-Anlage verwendet, so kann ein entsprechender Schätzwert der Energieerzeugung lokal von der Regel- oder Steuereinrichtung ermittelt werden oder von einem zentralen Server über das Internet empfangen werden. Bei einer Windturbine kann zum Ermitteln des Schätzwerts der Energieerzeugung eine geeignete Wetterprognose oder gemessene Windgeschwindigkeiten verwendet werden.

Die Regel- oder Steuereinrichtung kann konfiguriert sein, Verbrauchsdaten der nicht steuerbaren Energieverbraucher zu protokollieren, um einen Schätzwert des Energiebedarfs der nicht steuerbaren Energieverbraucher anhand der protokollierten Daten zu ermitteln. Hierzu kann die Regel- oder Steuereinrichtung einen geeigneten Datenspeicher umfassen oder mit einem geeigneten Speichermedium verbunden sein. Alternativ kann die Regel- oder Steuereinrichtung die Verbrauchsdaten zum Protokollieren über das Internet an einen zentralen Server übertragen.

Erfindungsgemäß wird die Aufgabe ferner durch ein Energiesystem in einem Gebäude gelöst. Das Energiesystem umfassend mindestens eine Vielzahl nicht steuerbarer Energieverbraucher, mindestens einen steuerbaren Energieverbraucher, einen Energiespeicher, einen Netzanschlusspunkt, über den Energie aus dem Netz bezogen und/oder in das Netz eingespeist werden kann, und eine Regel- oder Steuereinrichtung, die dazu ausgelegt ist, den mindestens einen steuerbaren Energieverbraucher und den Energiespeicher zu steuern.

Die Vielzahl nicht steuerbarer Energieverbraucher ist konfiguriert Energie aus dem Netz und/oder vom Energiespeicher zu beziehen. Ferner können die Energieverbraucher konfiguriert sein, Energie von einer erneuerbaren Energiequelle zu beziehen. Von welcher Energiequelle die Energieverbraucher Energie beziehen kann durch die Regel- oder Steuereinrichtung gesteuert werden.

Die Regel- oder Steuereinrichtung arbeitet zyklisch im Abstand von Intervallen und ist konfiguriert, einen aktuellen Ladezustand des Energiespeichers zu erfassen. Die Regel- oder Steuereinrichtung ist ferner konfiguriert einen Zeitraum, während dessen die nicht steuerbaren Energieverbraucher mit Energie aus dem Energiespeicher versorgt werden, festzulegen. Insbesondere sollen die nicht steuerbaren Energieverbraucher während des festgelegten Zeitraums, Energie nur aus dem Energiespeicher beziehen können.

Die Regel- oder Steuereinrichtung ist ferner konfiguriert, einen Grenzwert des Ladezustands des Energiespeichers in Abhängigkeit eines ermittelten Energiebedarfs der Vielzahl nicht steuerbarer Energieverbraucher während des festgelegten Zeitraums und in Abhängigkeit eines Zeitpunkts innerhalb des festgelegten Zeitraums zu ermitteln.

Die Regel- oder Steuereinrichtung ist ferner konfiguriert, den mindestens einen steuerbaren Energieverbraucher mit Energie vom Energiespeicher zu betreiben, und falls der aktuelle Ladezustand des Energiespeichers größer als der ermittelte Grenzwert des Ladezustands ist, den mindestens einen steuerbaren Energieverbraucher mit Energie vom Netz zu betreiben, falls der aktuelle Ladezustand des Energiespeichers kleiner als oder gleich dem ermittelten Grenzwert des Ladezustands ist.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
**Figur 1** Fig. 1 zeigt ein Energiesystem gemäß einem ersten Ausführungsbeispiel der Erfindung.
**Figur 2** Fig. 2 zeigt ein Ablaufdiagramm eines zweiten Ausführungsbeispiels der Erfindung.
**Figur 3** Fig. 3 zeigt charakteristische Verläufe der verbrauchten und erzeugten elektrischen Leistungen und des Ladezustands des Energiespeichers in einem Energiesystem gemäß dem ersten Ausführungsbeispiel.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

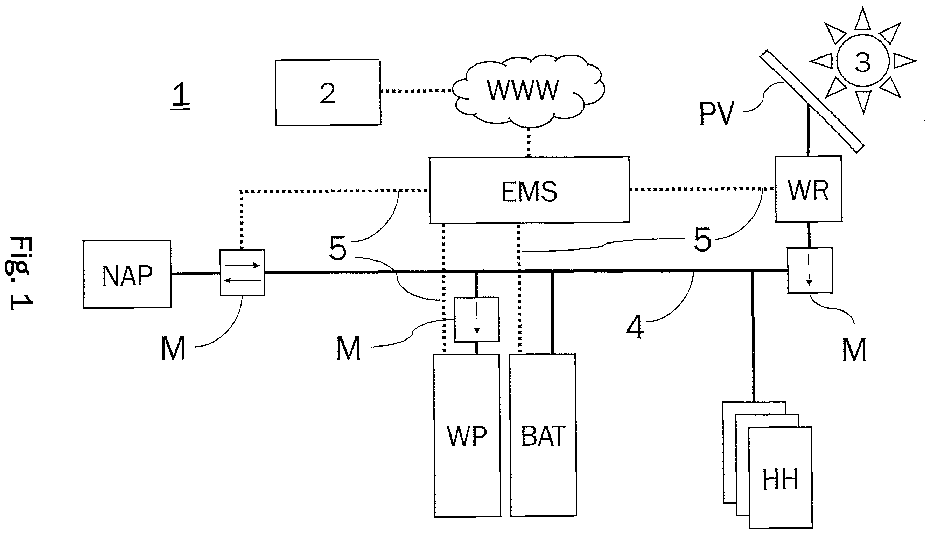

Figur 1 zeigt eine stark vereinfachte schematische Darstellung eines ersten Ausführungsbeispiels eines erfindungsgemäßen Energiesystems 1 in einem Gebäude. Das gezeigte Energiesystem 1 umfasst eine Photovoltaikanlage PV (im Folgenden auch als PV-Anlage abgekürzt), die Strahlungsenergie von der Sonne 3 in elektrische Energie umwandelt. Statt einer PV-Anlage oder zusätzlich zur PV-Anlage kann das Energiesystem 1 andere erneuerbare Energiequellen verwenden, wie zum Beispiel eine Windturbine. Ein Wechselrichter WR wandelt den von der PV-Anlage erzeugten Gleichstrom in Wechselstrom um, der von Verbrauchern genutzt werden kann. Die dicken durchgezogenen Linien illustrieren das interne Stromnetz 4 des Gebäudes, gepunktete Linien illustrieren Kommunikationsleitungen 5 für den Datenverkehr, zum Beispiel zum Steuern, Regeln und/oder für den Datenaustausch mit einem Server 2 über das Internet WWW beziehungsweise in einem Intranet oder einer Cloud.

Das interne Stromnetz 4 des Gebäudes ist über einen Netzanschlusspunkt NAP mit einem öffentlichen Stromnetz verbunden. Ein Stromzähler M misst den Energieverbrauch, der vom internen Stromnetz 4 aus dem öffentlichen Netz bezogen wird, sowie die Menge an Energie (beziehungsweise produzierte Leistung integriert über die Zeit), die vom internen Stromnetz 4 in das öffentliche Netz eingespeist wird.

Das Energiesystem 1 umfasst einen Energiespeicher BAT, der zum Beispiel aus Batterien beziehungsweise Akkus bestehen kann. Der Energiespeicher BAT umfasst einen Wechselrichter, der Wechselstrom aus dem Stromnetz 4 zum Laden des Energiespeichers BAT in Gleichstrom umgewandelt. Ferner kann der Wechselrichter Gleichstrom vom Energiespeicher BAT in Wechselstrom umwandeln. Zum Laden des Energiespeichers BAT mit Energie von der PV-Anlage kann auch eine direkte Stromleitung zwischen PV-Anlage und Energiespeicher BAT vorgesehen sein, so dass ein Hin-und-Her-Wandeln zwischen Gleichstrom und Wechselstrom nicht notwendig ist.

Ein weiterer Bestandteil des Energiesystems 1 ist eine Wärmepumpe WP als steuerbarer Energieverbraucher. Der Betrieb der Wärmepumpe WP kann durch eine Regel- oder Steuereinrichtung EMS geregelt oder gesteuert werden. Bei einer SGReady-Wärmepume ist es zudem möglich, den Betrieb der Wärmepumpe WP durch ein externes Signal vom Netzbetreiber steuern zu lassen. Das Energiesystem 1 kann auch weitere steuerbare Energieverbraucher umfassen. Beispielsweise kann eine Waschmaschine durch die Regel- oder Steuereinrichtung EMS gesteuert werden. Ferner können ein Lüftungssystem und/oder eine Nachtspeicherheizung als steuerbare Energieverbraucher vorgesehen sein.

Eine Vielzahl nicht steuerbarer Energieverbraucher HH ist am internen Stromnetz 4 des Gebäudes angeschlossen. Die nicht steuerbaren Energieverbraucher HH sind beispielsweise Haushaltsgeräte, die von einem Benutzer oder Bewohner des Gebäudes ein- und ausgeschaltet werden. Der Energiebedarf der nicht steuerbaren Energieverbraucher HH soll bevorzugt direkt von der PV-Anlage gedeckt werden, so dass die erzeugte Energie ohne Zwischenspeicherung direkt verbraucht werden kann. Ein direkter Verbrauch ist besonders effizient, da Verluste durch das Laden und Entladen des Energiespeichers BAT vermieden werden. Wenn die von der PV-Anlage produzierte Leistung nicht groß genug ist, um den Bedarf der nicht steuerbaren Energieverbraucher HH zu decken, sollen die nicht steuerbaren Energieverbraucher HH vom Energiespeicher BAT mit Energie versorgt werden. Wenn der Bedarf der nicht steuerbaren Energieverbraucher HH weder von der PV-Anlage noch vom Energiespeicher BAT gedeckt werden kann, so kann auch Energie aus dem öffentlichen Netz über den Netzanschlusspunkt NAT bezogen werden. Je effizienter das Energiesystem 1 betrieben wird, desto weniger Energie muss vom öffentlichen Netz bezogen werden.

Ein Stromzähler M misst die von der PV-Anlage bereitgestellte Energie. Die Wärmepumpe WP kann einen separaten Stromzähler M aufweisen, so dass Energie aus dem öffentlichen Netz zu einem besonders günstigen Tarif bezogen werden kann. Ein Ziel des Energiemanagements ist es daher, Energie aus dem öffentlichen Netz bevorzugt für den Betrieb der Wärmepumpe WP zu beziehen, sofern der Energiebedarf nicht durch die PV-Anlage gedeckt werden kann. Die nicht steuerbaren Energieverbraucher HH sollen bevorzugt mit Energie von der PV-Anlage oder aus dem Energiespeicher BAT versorgt werden.

Die Regel- oder Steuereinrichtung EMS ist über Kommunikationsleitungen 5 mit dem Wechselrichter WR der PV-Anlage, mit der Wärmepumpe WP, mit dem Energiespeicher BAT, mit dem Stromzähler M am Netzanschlusspunkt NAP und mit dem Internet WWW verbunden. Statt Kommunikationsleitungen 5 kann auch eine drahtlose Kommunikation zwischen der Regel- oder Steuereinrichtung EMS und den genannten Komponenten des Energiesystems 1 vorgesehen sein.

Das Energiesystem 1 kann in Abhängigkeit der von der PV-Anlage produzierten Leistung sowie des Ladezustands des Energiespeichers BAT in vier verschiedenen Betriebszuständen betrieben werden. In allen Betriebszuständen kann die Wärmepumpe WP direkt von der PV-Anlage versorgt werden, sofern ausreichend Leistung von der PV-Anlage produziert wird. Außerdem sollen die nicht steuerbaren Energieverbraucher HH direkt von der PV-Anlage versorgt werden. Somit soll die von der PV-Anlage erzeugte Energie wenn möglich direkt verbraucht werden, ohne ein Zwischenspeichern der Energie durchzuführen.

Ein erster Betriebszustand B1 liegt vor, wenn ein aktueller Ladezustand des Energiespeichers BAT SOC_{act} kleiner als ein festgelegter unterer Grenzwert SOC_{high} des Ladezustands ist. SOC steht für "State of Charge", Ladezustand. Der untere Grenzwert SOC_{high} dient dazu, einen ausreichenden Ladezustand des Energiespeichers BAT zum Versorgen der nicht steuerbaren Energieverbraucher HH nach Sonnenuntergang und vor Sonnenaufgang mit Energie aus dem Energiespeicher BAT zu gewährleisten. Im ersten Betriebszustand B1 soll der Energiespeicher BAT wenn möglich durch die PV-Anlage geladen werden. Die Wärmepumpe WP darf nicht vom Energiespeicher BAT versorgt werden. Die nicht steuerbaren Energieverbraucher HH sollen wenn möglich vom Energiespeicher BAT versorgt werden. Erst wenn der Energiespeicher BAT leer ist, sollen die nicht steuerbaren Energieverbraucher HH mit Strom vom öffentlichen Netz versorgt werden.

Ein zweiter Betriebszustand B2 liegt vor wenn der aktuelle Ladezustand des Energiespeichers BAT SOC_{act} höher als der untere Grenzwert SOC_{high} aber kleiner als ein oberer Grenzwert SOCₘₐₓ ist. Der obere Grenzwert SOCₘₐₓ kann zwei unterschiedliche Funktionen erfüllen. Einerseits dient er dazu, ausreichend Kapazität im Energiespeicher BAT vorzuhalten, um den Energiespeicher BAT während der Leistungsspitzen der PV-Anlage zu laden, so dass Abregelungsverluste vermieden werden können. Ferner dient der obere Grenzwert SOCₘₐₓ dazu, die Beladung des Energiespeichers BAT auf einen für die Lebensdauer des Energiespeichers BAT günstigen Wert zu begrenzen. Bestimmte Energiespeicher BAT für elektrische Energie, wie zum Beispiel Batterien oder Akkus, sollen nicht über sehr lange Zeiträume mit voller Kapazität beladen sein, da dies negative Einflüsse auf die Lebensdauer haben kann. Sinkt der Energieverbrauch der nicht steuerbaren Energieverbraucher HH für mehrere Tage oder Wochen drastisch ab, da beispielsweise die Bewohner oder Nutzer des Gebäudes im Urlaub sind, kann mittels des oberen Grenzwerts SOCₘₐₓ vermieden werden, dass der Energiespeicher während dieser Periode auf 100% geladen wird. Beispielsweise kann der obere Grenzwert SOCₘₐₓ für eine solche Periode auf einen Wert zwischen 50% und 70% eingestellt werden. Somit kann bei einem geringen erwarteten Bedarf der steuerbaren Energieverbraucher WP und der nicht steuerbaren Energieverbraucher HH, die Beladung des Energiespeichers BAT auf die zur Versorgung der Energieverbraucher WP, HH benötigte Energiemenge begrenzt werden. Im zweiten Betriebszustand B2 soll der Energiespeicher BAT durch die PV-Anlage geladen werden. Sowohl die Wärmepumpe WP als auch die nicht steuerbaren Energieverbraucher HH dürfen vom Energiespeicher BAT versorgt werden.

Das Energiesystem 1 wird in einem dritten Betriebszustand B3 betrieben, wenn der obere Grenzwert SOCₘₐₓ des Ladezustands erreicht ist und die PV-Anlage aufgrund von Bewölkung nicht beim Leistungsmaximum arbeitet. In diesem Zustand darf der Energiespeicher BAT nicht von PV-Anlage geladen werden. Sowohl die Wärmepumpe WP als auch die nicht steuerbaren Energieverbraucher HH dürfen vom Energiespeicher BAT versorgt werden.

Der vierte Betriebszustand B4 liegt vor, wenn der obere Grenzwert SOCₘₐₓ des Ladezustands erreicht ist und die Sonne scheint, so dass die PV-Anlage in Nähe ihres Leistungsmaximums Energie produziert. In diesem Zustand darf beziehungsweise kann der Energiespeicher BAT nicht mehr von der PV-Anlage geladen werden. Da die PV-Anlage eine hohe elektrische Leistung liefert, soll die Wärmepumpe WP vorrangig direkt mit Energie von der PV-Anlage betrieben werden. Weder die Wärmepumpe WP noch die nicht steuerbaren Energieverbraucher HH dürfen vom Energiespeicher BAT versorgt werden.

Ein Algorithmus, der die vier Betriebszustände B1 bis B4 anhand eines Vergleichs des aktuellen Ladezustands SOC_{act} mit den festgelegten Grenzwerten SOCₘₐₓ und SOC_{high} sowie anhand der aktuellen von der PV-Anlage produzierten Leistung ermittelt, ist in der Regel- oder Steuereinrichtung EMS implementiert.

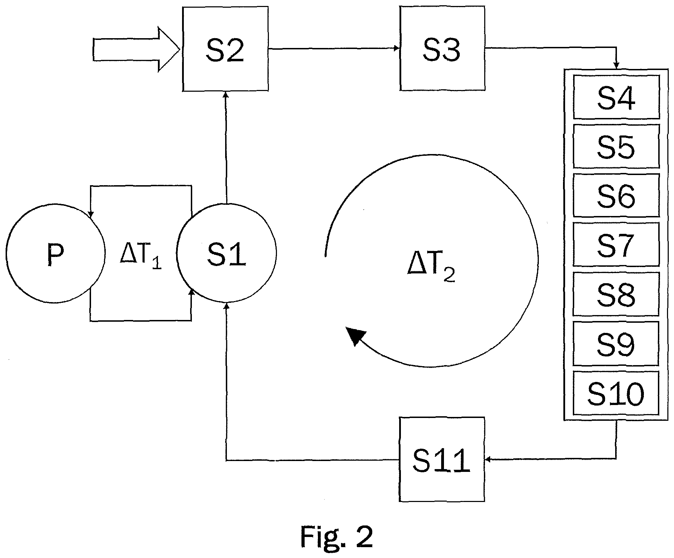

Figur 2 zeigt ein Ablaufdiagramm eines Verfahrens für ein Energiemanagement gemäß einem Ausführungsbeispiel der Erfindung. Das Verfahren erlaubt es eine Übernachtreserve eines Energiespeichers BAT für den Stromverbrauch in einem Gebäude zu berechnen und entsprechend vorzuhalten, um einen Bezug von Energie aus dem öffentlichen Stromnetz zu vermeiden. Somit kann ein besonders effizienter Betrieb einer PV-Anlage sichergestellt werden. Ferner kann erreicht werden, dass die Lebensdauer des Energiespeichers BAT möglichst hoch bleibt, da durch das Festlegen von Ladungs-Grenzwerten ein langer Betrieb in ungünstigen Ladungsbereichen vermieden werden kann.

Der Kreis links symbolisiert einen Prozess P, der zum Beispiel für den Betrieb eines Energiesystems in einem Gebäude steht. Das Energiesystem kann beispielsweise ein Energiesystem mit einer PV-Anlage, einem Energiespeicher (Batterie) und einer Wärmepumpe WP sein, wie es im ersten Ausführungsbeispiel beschrieben wurde. Das Energiemanagement-Verfahren kann beispielsweise von einer Regel- oder Steuereinrichtung EMS ausgeführt werden.

Mit einer Zeitkonstante ΔT₁ wird der Prozess P von der Regel- oder Steuereinrichtung EMS überwacht S1. Dabei wird geprüft, ob Stellgrößen im Energiesystem 1 in Abhängigkeit der Betriebszustände B1 bis B4 eingehalten werden. Dieser Schritt S1 kann zum Beispiel jede Sekunde durchgeführt werden.

Im nächsten Schritt S2 wird eine Zeitreihe zum Ermitteln eines Schätzwerts der Energieerzeugung durch die PV-Anlage eingelesen. Hierbei können zum Beispiel Wetterdaten für die nächsten 24 Stunden als Zeitreihe über das Internet empfangen werden. Wenn ein kleinerer Prädiktionshorizont verwendet wird, können die Wetterdaten zum Beispiel auch nur für die nächsten 8 oder 12 Stunden empfangen werden. Die Wetterdaten können dann für das Ermitteln eines Schätzwertes der Energieerzeugung durch die PV-Anlage verwendet werden. Wichtige Parameter der Wetterdaten sind zum Beispiel die erwarteten Sonnenstunden, der Grad der Bewölkung und der Sonnenstand. Diese Daten können zum Beispiel als Zeitreihen eingelesen werden. Die Zeitauflösung der Zeitreihen bestimmt dann die zeitliche Auflösung des daraus erstellten zeitlichen Verlaufs der ermittelten Energieerzeugung. Weitere Parameter wie zum Beispiel die Uhrzeit des Sonnenaufgangs und des Sonnenuntergangs können auch in einem Speicher hinterlegt sein.

Entsprechend kann auch eine Datenzeitreihe zum Ermitteln des erwarteten Energieverbrauchs eingelesen werden. Hierzu kann beispielsweise ein Datenspeicher mit protokollierten Verbrauchsdaten in der Regel- oder Steuereinrichtung EMS vorgesehen sein. Werden die Verbrauchsdaten in einem Server (beziehungsweise in der Cloud) gespeichert, so können die Daten über eine Internetverbindung abgerufen werden.

Im Schritt S3 wird das Energiemanagement-Verfahren, das die Schritte S4 bis S10 umfasst, gestartet. Verfahren kann zum Beispiel auf einem Prozessor der Regel- oder Steuereinrichtung EMS ausgeführt werden. Alternativ kann das Verfahren auch auf einem externen, über das Internet erreichbaren Server ausgeführt werden, so dass lokal weniger Rechenleistung zur Verfügung stehen muss. Das Ausführen auf einem Server hat zudem den Vorteil, dass eine Vielzahl von Regel-oder Steuereinrichtungen EMS auf das Verfahren zugreifen kann und das Verfahren verbessert oder aktualisiert werden kann, ohne dass lokal jeweils entsprechende Maßnahmen erforderlich sind.

Im ersten Schritt S4 wird der theoretische Netzbezug nur durch nicht steuerbare Energieverbraucher als Zeitreihe berechnet. Dieser Verbrauch wird auch als Haushaltsstrom bezeichnet. Hierzu wird eine Zeitreihe desjenigen elektrischen Leistungsbedarfs der nichtsteuerbaren Energieverbraucher berechnet, der die von der PV-Anlage bereitgestellte Leistung übersteigt. Die Berechnung wird für jeden Zeitschritts innerhalb des Prädiktionshorizonts durchgeführt. Ein Zeitschritt kann beispielsweise 10 bis 15 Minuten lang sein. Der Prädiktionshorizont kann beispielsweise 12 bis 24 Stunden umfassen, so dass er einen kompletten Lade- und/oder Entladezyklus der Batterie umfasst. Der ermittelte Verbrauch wird mit dem Entladewirkungsgrad der Batterie, also des Energiespeichers, multipliziert.

Im zweiten Schritt S5 wird der theoretische Netzbezug aller Energieverbraucher berechnet. Hier fließt der Verbrauch der steuerbaren und nicht steuerbaren Energieverbraucher ein, also beispielsweise der Verbrauch durch eine Wärmepumpe und der Haushaltsstrom. Die Berechnung erfolgt wiederum als Zeitreihe. Hierzu wird eine Zeitreihe des elektrischen Leistungsbedarfs aller elektrischen Verbraucher einschließlich Wärmepumpe berechnet, der die von der PV-Anlage bereitstellte Leistung übersteigt. Die Berechnung wird für jeden Zeitschritts innerhalb des Prädiktionshorizonts durchgeführt. Der ermittelte Verbrauch wird mit dem Entladewirkungsgrad der Batterie, also des Energiespeichers, multipliziert.

Im dritten Schritt des Verfahrens S6 wird der zu erwartende Überschuss der von der PV-Anlage erzeugten elektrischen Leistung (beziehungsweise Energie) als Zeitreihe berechnet. Dabei wird eine Zeitreihe der mittleren Überschussleistung der PV-Anlage (Leistung der PV-Anlage abzüglich der Summe der geschätzten aufgenommenen Leistung aller Verbraucher) für jeden Zeitschritt innerhalb des Prädiktionshorizonts berechnet und mit dem Beladewirkungsgrad der Batterie multipliziert, so dass Verluste beim Laden der Batterie berücksichtigt werden.

Im folgenden Schritt S7 wird die mindestens im Energiespeicher BAT vorzuhaltende Energiemenge für den Haushaltsstrom als Zeitreihe berechnet. Aus der mindestens vorzuhaltenden Energiemenge für den Haushaltsstrom kann ein Grenzwert SOC_{high} des Ladezustands des Energiespeichers BAT ermittelt werden (siehe S9). Bis zum Erreichen des Grenzwerts SOC_{high} des Ladezustands können auch steuerbare Energieverbraucher wie die Wärmepumpe WP Energie aus dem Energiespeicher BAT beziehen. Wird der Grenzwert SOC_{high} erreicht oder unterschritten, so werden nur noch die nicht steuerbaren Energieverbraucher vom Energiespeicher BAT versorgt.

Die Berechnung der mindestens im Energiespeicher vorzuhaltenden Energiemenge kann beispielsweise durch eine rückwärtsgewandte diskrete Integration der Differenz der berechneten Zeitreihen aus den Schritten S4 und S6 ab dem Zeitpunkt des letztmaligen Auftretens von Netzbezügen innerhalb des Prädiktionshorizonts erfolgen. Dabei wird das Integral auf energetisch zulässige Werte beschränkt, so dass die Speicherkapazität des Energiespeichers BAT keine Werte unter 0% beziehungsweise über 100% annimmt. Insbesondere wird die vorzuhaltende Energiemenge bis zu einem Zeitpunkt To innerhalb des Prädiktionshorizonts bestimmt, in dem ein erneutes Laden des Energiespeichers BAT möglich ist.

Der Zeitraum ΔT₀ kann beispielsweise in Abhängigkeit des Sonnenstandes, insbesondere in Abhängigkeit von den Zeitpunkten des Sonnenuntergans und des Sonnenaufgangs bestimmt werden, so dass der Zeitraum ΔT₀ im Wesentlichen von der Dauer der Nacht abhängt. So kann der Zeitraum ΔT₀ von der Energieerzeugung der PV-Anlage abhängig sein. Insbesondere wird der Zeitraum ΔT₀ so festgelegt, dass ausreichend Energie im Energiespeicher BAT vorgehalten wird, um die Energieverbraucher HH mit Energie zu versorgen, bis die Energieverbraucher HH wieder mit Energie von der PV-Anlage versorgt werden können. Der Grenzwert SOC_{high} dient also im Wesentlichen dazu, die Energieversorgung der nicht steuerbaren Energieverbraucher HH während eines Zeitraums sicherzustellen, in dem keine Energie von der erneuerbaren Energiequelle bereitgestellt wird, also beispielsweise nachts, wenn eine PV-Anlage keine Energie erzeugen kann.

In einem weiteren Schritt S8 kann die höchstens benötigte Energiemenge für den Haushaltsstrom und die Wärmepumpe WP als Zeitreihe berechnet werden. Die Berechnung kann zum Beispiel durch eine rückwärtsgewandte diskrete Integration der Differenz der berechneten Leistungszeitreihen aus den Schritten S5 und S6 innerhalb des Prädiktionshorizonts durchgeführt werden. Dabei wird das Integral auf energetisch zulässige Werte beschränkt, so dass die Speicherkapazität des Energiespeichers BAT keine Werte unter 0% beziehungsweise über 100% annimmt.

Im Schritt S9 kann der Grenzwert SOC_{high} aus dem Ergebnis der Berechnung in Schritt S7 abgeleitet werden. Der Grenzwert SOC_{high} wird in Abhängigkeit des ermittelten Energiebedarfs der Energieverbraucher während des Zeitraums ΔT₀ ermittelt. Das Ermitteln des Grenzwerts SOC_{high} kann für jeden Zeitschritt innerhalb des Prädiktionshorizonts durchgeführt werden. Insbesondere kann der Grenzwert SOC_{high} am Ende des Zeitraums ΔT₀ ein Minimum von 0% erreichen.

In einem weiteren Schritt S10 kann zusätzlich ein oberer Grenzwert SOCₘₐₓ für den Ladezustand des Energiespeichers BAT in Abhängigkeit des ermittelten Verlaufs der Energieerzeugung durch die PV-Anlage und/oder in Abhängigkeit des erwarteten Verbrauchs der Energieerzeuger im festgelegten Zeitraum ΔT₀ sowie im Prädiktionshorizont ermittelt werden. Dieser Grenzwert SOCₘₐₓ kann einerseits dafür sorgen, dass beim Laden des Energiespeichers BAT tagsüber ausreichend Kapazität für die erwarteten Leistungsspitzen der PV-Anlage vorgehalten wird, so dass Abregelungsverluste vermieden werden können. Anderseits kann der obere Grenzwert SOCₘₐₓ dazu dienen, den Ladezustand des Energiespeichers BAT auf einen für die Lebensdauer günstigen Maximalwert zu begrenzen.

Die Berechnung des oberen Grenzwerts SOCₘₐₓ kann für jeden Zeitschritt innerhalb des Prädiktionshorizonts durchgeführt werden. Der obere Grenzwert SOCₘₐₓ kann beispielsweise so bestimmt werden, dass er zum Zeitpunkt des Sonnenuntergangs, wenn keine weitere Energieproduktion durch die PV-Anlage bis zum nächsten Tag erwartet wird, einen Maximalwert von 100% erreicht. Alternativ kann für den oberen Grenzwert SOCₘₐₓ ein Maximalwert zwischen 50% und 70% festgelegt werden, wenn der erwartete Verbrauch der nicht steuerbaren Energieverbraucher HH so gering ist, dass ein dauerhafter Ladezustand nahe 100% vermieden werden soll. Hierdurch kann ein negativer Einfluss auf die Lebensdauer des Energiespeichers BAT vermieden werden.

Nachdem das Verfahren mit den Schritten S4 bis S10 durchgeführt wurde, können in einem Schritt S11 die berechneten Stellgrößen, insbesondere die Grenzwerte SOC_{high} und SOCₘₐₓ ausgegeben werden. Das gesamte Verfahren wird zyklisch im Abstand von Intervallen ΔT₂ von beispielsweise 10 oder 15 Minuten durchgeführt.

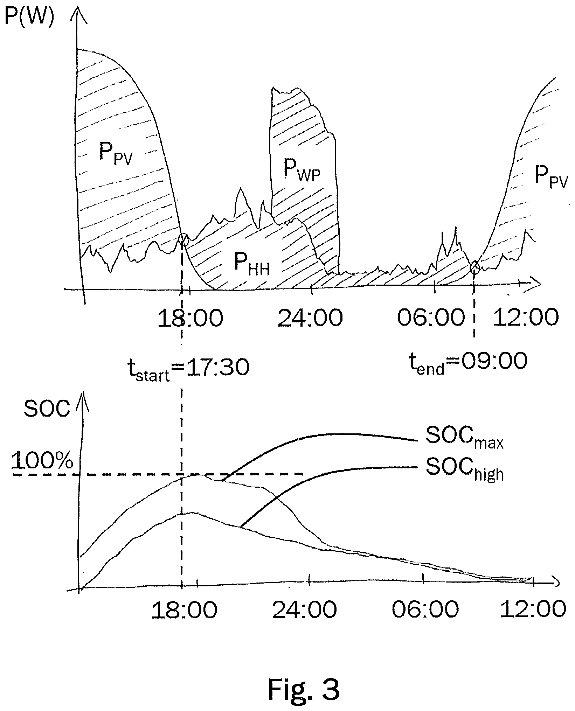

Figur 3 zeigt einen zeitlichen Verlauf der durch die PV-Anlage erzeugten Leistung P_{PV}, der durch die Wärmepumpe WP aufgenommenen Leistung P_{WP} und der durch die nicht steuerbaren Energieverbraucher (Haushaltsstrom) aufgenommenen Leistung P_{HH} über einen Prädiktionshorizont von 24 Stunden.

Um 17:30 fällt die von der PV-Anlage PV erzeugte Leistung P_{PV} unter den Verbrauch P_{HH} der nicht steuerbaren Energieverbraucher. Dieser Zeitpunkt wird in Figur 3 als tₛₜₐᵣₜ bezeichnet. Ab diesem Zeitpunkt muss Energie aus dem Energiespeicher BAT zum Decken des Haushaltsstroms P_{HH} bezogen werden. Zum Zeitpunkt tₛₜₐᵣₜ beginnt also insbesondere der festgelegte Zeitraum ΔT₀. Ab ca. 18:30 Uhr, nach Sonnenuntergang, liefert die PV-Anlage keine Leistung mehr (P_{PV} = 0 W), so dass der Haushaltsstrom P_{HH} komplett vom Energiespeicher BAT bereitgestellt werden muss.

Um ca. 06:00 Uhr geht in dem in Figur 3 gezeigten beispielhaften zeitlichen Verlauf des Energieverbrauchs und der Energieerzeugung die Sonne auf. Die von der PV-Anlage bereitgestellt Leistung P_{PV} beginnt langsam von OW anzusteigen. Der Zeitpunkt, in dem die von der PV-Anlage erzeugte Leistung P_{PV} wieder die von den nicht steuerbaren Energieverbrauchern aufgenommene Leistung P_{HH} übersteigt, wird in Fig. 3 als t_{end} bezeichnet (um ca. 09:00 Uhr). Dieser Zeitpunkt entspricht im Wesentlichen dem Ende des festgelegten Zeitraums ΔT₀. Dies ist jedoch nicht notwendigerweise auch der Zeitpunkt, in dem ein Ladvorgang des Energiespeichers BAT gestartet wird. Zum Vermeiden von Abregelungsverlusten kann es nämlich verteilhaft sein, den Energiespeicher BAT erst bei einem hohen Leistungsüberschuss P_{PV} gegenüber dem Verbrauch P_{HH} (zum Beispiel zur Mittagszeit) zu laden. In der Zwischenzeit kann die überschüssige Leistung (P_{PV} - P_{HH}) ins öffentliche Stromnetz eingespeist werden.

Die Fläche unter der Kurve P_{HH} ist ein Maß für die Energiemenge, die durch den Haushaltsstrom (von den nicht steuerbaren Energieverbrauchern HH) verbraucht wird. Um bis zum Zeitpunkt t_{end} um ca. 09:00 Uhr keine zusätzliche Energie aus dem Netz beziehen zu müssen, soll der Energiespeicher BAT die dafür notwendige Energiemenge vorrätig halten. Dazu wird der untere Grenzwert SOC_{high} für den Ladezustand berechnet, wie zuvor beschrieben wurde. Der Grenzwert SOC_{high} ergibt sich im Wesentlichen aus dem ermittelten Energieverbrauch für den Haushaltsstrom P_{HH} (Fläche unter der Kurve P_{HH}) während des festgelegten Zeitraums ΔT₀ im Prädiktionshorizont multipliziert mit einem Entladewirkungsgrad des Energiespeichers BAT. Zusätzlich kann eine festgelegte Energiemenge als Notreserve vorgehalten werden. In diesem Fall kann der Grenzwert SOC_{high} entsprechend erhöht werden.

In einem Zeitraum um Mitternacht (24:00 Uhr) herum wird in dem dargestellten beispielhaften Leistungsverlauf die Wärmepumpe WP (mit der Leistungsaufnahme P_{WP}) betrieben. Befindet sich in diesem Zeitraum der aktuelle Ladezustand des Energiespeichers BAT über dem Grenzwert SOC_{high}, so kann Energie aus dem Energiespeicher BAT zum Betreiben der Wärmepumpe WP verwendet werden. Ist der Grenzwert SOC_{high} erreicht, beziehungsweise wurde dieser unterschritten, so wird die Wärmepumpe mit Energie aus dem öffentlichen Stromnetz betrieben. Insbesondere wenn die Wärmepumpe WP über einen separaten Stromzähler mit dem öffentlichen Stromnetz verbunden ist, kann hierbei ein besonders günstiger Wärmepumpentarif genutzt werden.

Sofern der Energiebedarf des Haushaltsstroms P_{HH} korrekt ermittelt wurde, sollte der Ladezustand des Energiespeichers BAT nie unter den Grenzwert SOC_{high} fallen, da dieser bei jedem Berechnungsschritt aktualisiert und entsprechend verringert wird. Zum Zeitpunkt t_{end}, der im Wesentlichen dem Ende des festgelegten Zeitraums ΔT₀ entspricht, liegt der Grenzwert SOC_{high} bei oder nahe bei 0%. Die Berechnung kann wie zuvor beschrieben alle 10 oder 15 Minuten durchgeführt werden.

### Bezugszeichenliste

- **1**: Energiesystem
- **2**: Server
- **3**: Sonne
- **4**: Internes Stromnetz
- **5**: Kommunikationsleitungen
- **PV**: Photovoltaik-Anlage (PV-Anlage)
- **WP**: steuerbarer Energieverbraucher (Wärmepumpe)
- **BAT**: Energiespeicher
- **NAP**: Netzanschlusspunkt
- **WWW**: Internet
- **EMS**: Regel- oder Steuereinrichtung
- **M**: Stromzähler
- **WR**: Wechselrichter
- **HH**: nicht steuerbarer Energieverbraucher (Haushaltsgerät)

## Patentansprüche

1. Energiemanagement-Verfahren für ein Energiesystem (1) in einem Gebäude, wobei das Energiesystem (1) umfasst:
eine Vielzahl nicht steuerbarer Energieverbraucher (HH),
mindestens einen steuerbaren Energieverbraucher (WP),
einen Energiespeicher (BAT),
einen Netzanschlusspunkt (NAP), über den Energie aus einem Netz bezogen und/oder in das Netz eingespeist werden kann, und
eine Regel- oder Steuereinrichtung (EMS), die dazu ausgelegt ist, den mindestens einen steuerbaren Energieverbraucher (WP) und den Energiespeicher (BAT) zu regeln oder zu steuern,
wobei die Vielzahl nicht steuerbarer Energieverbraucher (HH) konfiguriert ist, Energie aus dem Netz oder vom Energiespeicher (BAT) zu beziehen, und wobei das Verfahren die folgenden Schritte umfasst, die zyklisch im Abstand von Intervallen (ΔT2) durchgeführt werden:
Erfassen eines aktuellen Ladezustands (SOC_{act}) des Energiespeichers (BAT);
Festlegen eines Zeitraums (ΔT₀), während dessen die nicht steuerbaren Energieverbraucher (HH) mit Energie aus dem Energiespeicher (BAT) versorgt werden;
Ermitteln eines Grenzwerts (SOC_{high}) des Ladezustands des Energiespeichers (BAT) in Abhängigkeit eines ermittelten oder geschätzten Energiebedarfs der Vielzahl nicht steuerbarer Energieverbraucher (HH) während des festgelegten Zeitraums (ΔT₀) und in Abhängigkeit eines Zeitpunkts innerhalb des festgelegten Zeitraums (ΔT₀);
Betreiben des mindestens einen steuerbaren Energieverbrauchers (WP) mit Energie vom Energiespeicher (BAT), falls der aktuelle Ladezustand (SOC_{act}) des Energiespeichers (BAT) größer als der ermittelte Grenzwert (SOC_{high}) des Ladezustands ist; und
Betreiben des mindestens einen steuerbaren Energieverbrauchers (WP) mit Energie vom Netz, falls der aktuelle Ladezustand (SOC_{act}) des Energiespeichers (BAT) kleiner als oder gleich dem ermittelten Grenzwert (SOC_{high}) des Ladezustands ist.

2. Verfahren nach Anspruch 1, wobei mindestens ein steuerbarer Energieverbraucher eine Wärmepumpe (WP) ist.

3. Verfahren nach Anspruch 1 oder 2, wobei das Energiesystem (1) ferner eine Photovoltaikanlage (PV) umfasst, die konfiguriert ist, die Energieverbraucher (HH, WP) und den Energiespeicher (BAT) mit Energie zu versorgen.

4. Verfahren nach Anspruch 3, wobei der Energiespeicher (BAT) nur von der Photovoltaikanlage (PV) geladen werden kann.

5. Verfahren nach Anspruch 3 oder 4, wobei die Regel- oder Steuereinrichtung (EMS) mit dem Internet (WWW) verbunden ist, um eine Prognose der Sonneneinstrahlung zum Ermitteln der Energieerzeugung durch die Photovoltaikanlage (PV) zu empfangen.

6. Verfahren nach mindestens einem der vorigen Ansprüche, wobei die Regel- oder Steuereinrichtung (EMS) konfiguriert ist, Verbrauchsdaten der nicht steuerbaren Energieverbraucher (HH) zu protokollieren, um einen Energiebedarf der nicht steuerbaren Energieverbraucher (HH) anhand der protokollierten Daten zu ermitteln oder abzuschätzen.

7. Verfahren nach mindestens einem der vorigen Ansprüche, wobei der mindestens eine steuerbare Energieverbraucher (WP) über einen separaten Stromzähler am Netzanschlusspunkt (NAP) angeschlossen ist.

8. Energiesystem (1) für ein Gebäude, umfassend:
eine Vielzahl nicht steuerbarer Energieverbraucher (HH),
mindestens einen steuerbaren Energieverbraucher (WP),
einen Energiespeicher (BAT),
einen Netzanschlusspunkt (NAP), über den Energie aus einem Netz bezogen und/oder in das Netz eingespeist werden kann, und
eine Regel- oder Steuereinrichtung (EMS), die dazu ausgelegt ist, den mindestens einen steuerbaren Energieverbraucher (WP) und den Energiespeicher (BAT) zu regeln oder zu steuern,
wobei die Vielzahl nicht steuerbarer Energieverbraucher (HH) konfiguriert ist, Energie aus dem Netz oder vom Energiespeicher (BAT) zu beziehen, und wobei die Regel- oder Steuereinrichtung (EMS) konfiguriert ist, zyklisch im Abstand von Intervallen (ΔT2):
einen aktuellen Ladezustand (SOC_{act}) des Energiespeichers (BAT) zu erfassen;
einen Zeitraum (ΔT₀), während dessen die nicht steuerbaren Energieverbraucher (HH) mit Energie aus dem Energiespeicher versorgt werden, festzulegen;
einen Grenzwert (SOC_{high}) des Ladezustands des Energiespeichers (BAT) in Abhängigkeit eines ermittelten oder geschätzten Energiebedarfs der Vielzahl nicht steuerbarer Energieverbraucher (HH) während des festgelegten Zeitraums (ΔT₀) und in Abhängigkeit eines Zeitpunkts innerhalb des festgelegten Zeitraums (ΔT₀) zu ermitteln;
den mindestens einen steuerbaren Energieverbraucher (WP) mit Energie vom Energiespeicher (BAT) zu betrieben, falls der aktuelle Ladezustand (SOC_{act}) des Energiespeichers (BAT) größer als der ermittelte Grenzwert (SOC_{high}) des Ladezustands ist; und
den mindestens einen steuerbaren Energieverbraucher (WP) mit Energie vom Netz zu betreiben, falls der aktuelle Ladezustand (SOC_{act}) des Energiespeichers (BAT) kleiner als oder gleich dem ermittelten Grenzwert (SOC_{high}) des Ladezustands ist.

9. Energiesystem (1) nach Anspruch 8, ferner umfassend eine Photovoltaikanlage (PV), die konfiguriert ist, die Energieverbraucher (HH, WP) und den Energiespeicher (BAT) mit Energie zu versorgen.

10. Energiesystem (1) nach Anspruch 8 oder 9, wobei mindestens ein steuerbarer Energieverbraucher eine Wärmepumpe (WP) ist.

## Claims

1. An energy management method for an energy system (1) in a building, wherein the energy system (1) comprises:
a plurality of non-controllable energy consumers (HH),
at least one controllable energy consumer (WP),
an energy storage (BAT),
a mains connection point (NAP) via which energy can be obtained from a mains and/or fed into the mains, and
a regulation or control device (EMS) which is configured to regulate or control said at least one controllable energy consumer (WP) and said energy storage (BAT),
wherein said plurality of non-controllable energy consumers (HH) is configured to obtain energy from the mains or from said energy storage (BAT), and wherein the method comprises the following steps which are cyclically performed at a distance of intervals (ΔT2):
acquiring a current state of charge (SOC_{act}) of said energy storage (BAT);
setting a period of time (ΔT₀) during which said non-controllable energy consumers (HH) are supplied with energy from said energy storage (BAT);
determining a limit value (SOC_{high}) of the state of charge of said energy storage (BAT) depending on a determined or estimated energy demand of said plurality of non-controllable energy consumers (HH) during said set period of time (ΔT₀) and depending on a point of time within said set period of time (ΔT₀);
operating said at least one controllable energy consumer (WP) with energy from said energy storage (BAT) if the current state of charge (SOC_{act}) of said energy storage (BAT) is greater than said determined limit value (SOC_{high}) of the state of charge; and
operating said at least one controllable energy consumer (WP) with energy from the mains if the current state of charge (SOC_{act}) of said energy storage (BAT) is less than or equal to said determined limit value (SOC_{high}) of the state of charge.

2. The method according to claim 1, wherein at least one controllable energy consumer is a heat pump (WP).

3. The method according to claim 1 or 2, wherein said energy system (1) further comprises a photovoltaic installation (PV) which is configured to supply energy to said energy consumers (HH, WP) and to said energy storage (BAT).

4. The method according to claim 3, wherein said energy storage (BAT) can only be charged from said photovoltaic installation (PV).

5. The method according to claim 3 or 4, wherein said regulation or control device (EMS) is connected to the Internet (WWW) to receive a prediction of the solar radiation for determining the energy generation by said photovoltaic installation (PV).

6. The method according to at least one of the preceding claims, wherein said regulation or control device (EMS) is configured to record consumption data of said non-controllable energy consumers (HH) to determine or estimate an energy demand of said non-controllable energy consumers (HH) based on the recorded data.

7. The method according to at least one of the preceding claims, wherein said at least one controllable energy consumer (WP) is connected to the mains connection point (NAP) via a separate electricity meter.

8. An energy system (1) for a building, comprising:
a plurality of non-controllable energy consumers (HH),
at least one controllable energy consumer (WP),
an energy storage (BAT),
a mains connection point (NAP) via which energy can be obtained from a mains and/or fed into the mains, and
a regulation or control device (EMS), which is configured to regulate or control said at least one controllable energy consumer (WP) and said energy storage (BAT),
wherein said plurality of non-controllable energy consumers (HH) is configured to obtain energy from the mains or from said energy storage (BAT), and wherein said regulation or control device (EMS) is configured, cyclically at a distance of intervals (ΔT2), to:
acquire a current state of charge (SOC_{act}) of said energy storage (BAT);
set a period of time (ΔT₀) during which said non-controllable energy consumers (HH) are supplied with energy from said energy storage;
determine a limit value (SOC_{high}) of the state of charge of said energy storage (BAT) depending on a determined or estimated energy demand of said plurality of non-controllable energy consumers (HH) during said set period of time (ΔT₀) and depending on a point of time within said set period of time (ΔT₀);
operate said at least one controllable energy consumer (WP) with energy from said energy storage (BAT) if the current state of charge (SOC_{act}) of said energy storage (BAT) is greater than said determined limit value (SOC_{high}) of the state of charge; and
operate said at least one controllable energy consumer (WP) with energy from the mains if the current state of charge (SOC_{act}) of said energy storage (BAT) is less than or equal to said determined limit value (SOC_{high}) of the state of charge.

9. The energy system (1) according to claim 8, further comprising a photovoltaic installation (PV), which is configured to supply energy to said energy consumers (HH, WP) and to said energy storage (BAT).

10. The energy system (1) according to claim 8 or 9, wherein at least one controllable energy consumer is a heat pump (WP).

## Revendications

1. Procédé de gestion de l'énergie pour un système d'énergie (1) dans un bâtiment, dans lequel le système d'énergie (1) comprend :
une pluralité d'utilisateurs d'énergie (HH) ne pouvant être commandés,
au moins un utilisateur d'énergie (WP) pouvant être commandé,
une réserve d'énergie (BAT),
un point de raccordement au réseau (NAP) via lequel une énergie peut être obtenue depuis un réseau et/ou injectée dans le réseau, et
un dispositif de régulation et de commande (EMS) qui est conçu pour réguler ou commander le au moins un utilisateur d'énergie (WP) pouvant être commandé et la réserve d'énergie (BAT),
dans lequel la pluralité d'utilisateurs d'énergie (HH) ne pouvant être commandés est configurée pour obtenir une énergie depuis le réseau ou la réserve d'énergie (BAT), et dans lequel le procédé comprend les étapes suivantes, qui sont exécutées de façon cyclique et espacée par des intervalles (ΔT2), consistant à :
saisir un état de charge en cours (SOC_{act}) de la réserve d'énergie (BAT) ;
établir une période (ΔT₀) pendant laquelle les utilisateurs d'énergie (HH) ne pouvant être commandés sont approvisionnés avec une énergie depuis la réserve d'énergie (BAT) ;
calculer une valeur limite (SOC_{high}) de l'état de charge de la réserve d'énergie (BAT) en fonction d'un besoin en énergie déterminé ou estimé de la pluralité d'utilisateurs d'énergie (HH) ne pouvant être commandés pendant la période (ΔT₀) établie et en fonction d'un instant à l'intérieur de la période (ΔT₀) établie ;
faire fonctionner le au moins un utilisateur d'énergie (WP) pouvant être commandé avec une énergie de la réserve d'énergie (BAT) au cas où l'état de charge en cours (SOC_{act}) de la réserve d'énergie (BAT) est supérieur à la valeur limite (SOC_{high}) calculée de l'état de charge ; et
faire fonctionner le au moins un utilisateur d'énergie (WP) pouvant être commandé avec une énergie du réseau au cas où l'état de charge en cours (SOC_{act}) de la réserve d'énergie (BAT) est inférieur ou égal à la valeur limite (SOC_{high}) calculée de l'état de charge.

2. Procédé selon la revendication 1, dans lequel au moins un utilisateur d'énergie pouvant être commandé est une pompe à chaleur (WP).

3. Procédé selon la revendication 1 ou 2, dans lequel le système d'énergie (1) comprend en outre une installation photovoltaïque (PV) qui est configurée pour approvisionner en énergie les utilisateurs d'énergie (HH, WP) et la réserve d'énergie (BAT).

4. Procédé selon la revendication 3, dans lequel la réserve d'énergie (BAT) peut être chargée uniquement par l'installation photovoltaïque (PV).

5. Procédé selon la revendication 3 ou 4, dans lequel le dispositif de régulation et de commande (EMS) est relié à l'internet (WWW) afin de recevoir une prévision de l'ensoleillement pour calculer la production d'énergie par l'installation photovoltaïque (PV).

6. Procédé selon au moins l'une des revendications précédentes, dans lequel le dispositif de régulation et de commande (EMS) est configuré pour consigner des données d'utilisation des utilisateurs d'énergie (HH) ne pouvant être commandés afin de calculer ou d'estimer un besoin en énergie des utilisateurs d'énergie (HH) ne pouvant être commandés à l'aide des données consignées.

7. Procédé selon au moins l'une des revendications précédentes, dans lequel le au moins un utilisateur d'énergie (WP) pouvant être commandé est raccordé au point de raccordement au réseau (NAP) via un compteur de courant séparé.

8. Système d'énergie (1) pour un bâtiment, comprenant :
une pluralité d'utilisateurs d'énergie (HH) ne pouvant être commandés,
au moins un utilisateur d'énergie (WP) pouvant être commandé,
une réserve d'énergie (BAT),
un point de raccordement au réseau (NAP) via lequel une énergie peut être obtenue depuis un réseau et/ou injectée dans le réseau, et
un dispositif de régulation et de commande (EMS) qui est conçu pour réguler ou commander le au moins un utilisateur d'énergie (WP) pouvant être commandé et la réserve d'énergie (BAT),
dans lequel la pluralité d'utilisateurs d'énergie (HH) ne pouvant être commandés est configurée pour obtenir une énergie depuis le réseau ou la réserve d'énergie (BAT), et dans lequel le dispositif de régulation et de commande (EMS) est configuré pour, de façon cyclique et espacée par des intervalles (ΔT2) :
saisir un état de charge en cours (SOC_{act}) de la réserve d'énergie (BAT) ;
établir une période (ΔT₀) pendant laquelle les utilisateurs d'énergie (HH) ne pouvant être commandés sont approvisionnés avec une énergie depuis la réserve d'énergie ;
calculer une valeur limite (SOC_{high}) de l'état de charge de la réserve d'énergie (BAT) en fonction d'un besoin en énergie déterminé ou estimé de la pluralité d'utilisateurs d'énergie (HH) ne pouvant être commandés pendant la période (ΔT₀) établie et en fonction d'un instant à l'intérieur de la période (ΔT₀) établie ;
faire fonctionner le au moins un utilisateur d'énergie (WP) pouvant être commandé avec une énergie de la réserve d'énergie (BAT) au cas où l'état de charge en cours (SOC_{act}) de la réserve d'énergie (BAT) est supérieur à la valeur limite (SOC_{high}) calculée de l'état de charge ; et
faire fonctionner le au moins un utilisateur d'énergie (WP) pouvant être commandé avec une énergie du réseau au cas où l'état de charge en cours (SOC_{act}) de la réserve d'énergie (BAT) est inférieur ou égal à la valeur limite (SOC_{high}) calculée de l'état de charge.

9. Système d'énergie (1) selon la revendication 8, comprenant en outre une installation photovoltaïque (PV) qui est configurée pour approvisionner en énergie les utilisateurs d'énergie (HH, WP) et la réserve d'énergie (BAT).

10. Système d'énergie (1) selon la revendication 8 ou 9, dans lequel au moins un utilisateur d'énergie pouvant être commandé est une pompe à chaleur (WP).
